# EUROPEAN PATENT APPLICATION

(11) **EP 2 326 128 A1**
(43) Date of publication of application: **25.05.2011**
(21) Application number: 10191449.7
(22) Date of filing: 16.11.2010
(51) Int. Cl.: H04W 48/18, H04W 88/06, G06K 7/10, H04W 40/02

(54) **Network-agnostic encoded information reading terminal**

(30) Priority: 19.11.2009 US 621914
(71) Applicant: Hand Held Products, Inc., Skaneateles Falls, New York 13153 (US)
(72) Inventor: Sauerwein, Jr., James Timothy, Morristown, NJ 07962-2245 (US); Bouchat, Christopher, Morristown, NJ 07962-2245 (US); Okraski, Andrew, Morristown, NJ 07962-2245 (US); Dobeck, Brian, Morristown, NJ 07962-2245 (US)
(74) Representative: Buckley, Guy Julian

(57) **Abstract**

An encoded information reading (EIR) terminal can comprise a microprocessor, a memory communicatively coupled to the microprocessor, an EIR device, a multi-band antenna, and a wireless communication interface. The EIR device can be provided by a bar code reading device, an RFID reading device, and/or a card reading device. The EIR device can be configured to perform outputting raw message data comprising an encoded message and/or outputting decoded message data corresponding to an encoded message. The wireless communication interface can further comprise a radio frequency front end electrically coupled to the multi-band antenna. The wireless communication interface can be configured to support at least two wireless communication protocols. The microprocessor can be configured to execute a wireless communication protocol selector software program, which in turn can be configured to dynamically select a wireless communication network and/or a wireless communication protocol. Selection of a wireless communication network and/or a wireless communication protocol can be performed by optimizing a location-based criterion and/or a least cost routing criterion. The microprocessor can be configured to execute a system software program and/or an application software program in parallel with the wireless communication protocol selector software program switching a wireless communication network and/or a wireless communication protocol.

## Description

### CROSS REFERENCE TO RELATED APPLICATIONS

This application claims priority to U. S. Patent Application No. 12/621,914 filed November 19, 2009 entitled, "Network-Agnostic Encoded Information Reading Terminal." The priority of the above application is claimed and is incorporated herein by reference in its entirety.

### FIELD OF THE INVENTION

The invention is generally related to encoded information reading (EIR) terminals and is specifically related to an EIR terminal comprising a multi-protocol wireless communication interface capable of seamlessly switching wireless communication networks or protocols.

### BACKGROUND OF THE INVENTION

Encoded information reading (EIR) terminals equipped with wireless communication interfaces are widely used in retail stores, shipping facilities, etc. While wireless communication of EIR terminals offers many advantages as compared to wired communications, traditional wireless communication interfaces demonstrate noticeable shortcomings, e.g., by failing to support more than one communication protocol and/or standard, or by failing to switch wireless communication networks/protocols without restarting the EIR terminal.

Accordingly, there is a need for further advances in EIR terminals and systems which would support multiple communication protocols and standards.

### SUMMARY OF THE INVENTION

There is provided an encoded information reading (EIR) terminal comprising a microprocessor, a memory communicatively coupled to the microprocessor, an EIR device, a multi-band antenna, and a wireless communication interface.

The EIR device can be provided by a bar code reading device, an RFID reading device, and/or a card reading device. The EIR device can be configured to perform outputting raw message data comprising an encoded message and/or outputting decoded message data corresponding to an encoded message.

The wireless communication interface can further comprise a radio frequency front end electrically coupled to the multi-band antenna. The wireless communication interface can be configured to support at least two wireless communication protocols.

The microprocessor can be configured to execute a wireless communication protocol selector software program, which in turn can be configured to dynamically select a wireless communication network and/or a wireless communication protocol.

In one embodiment, selection of a wireless communication network and/or a wireless communication protocol can be performed by optimizing a location-based criterion and/or a least cost routing criterion.

In another embodiment, the microprocessor can be configured to execute a system software program and/or an application software program in parallel with the wireless communication protocol selector software program switching a wireless communication network and/or a wireless communication protocol.

### BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings, wherein:

Fig. 1 depicts a network-level layout of a data collection system employing EIR terminal according to the invention.

Fig. 2 depicts a functional layout of a wireless communication interface.

Fig. 3 depicts component-level layout of an EIR terminal according to the invention.

Fig. 4 illustrates the structure of one embodiment of a location-based look-up table according to the invention.

Fig. 5 illustrates the structure of one embodiment of a least-cost routing (LCR) look-up table according to the invention.

Figs. 6a and 6b illustrate an exemplary hand held EIR terminal housing;

Figs. 7a-7c illustrate an exemplary portable and remountable EIR terminal housing;

Fig. 8a illustrates a first exemplary deployment of an EIR terminal according to the invention within a retail store;

Fig. 8b illustrates a second exemplary deployment of an EIR terminal according to the invention within a retail store;

Figs. 8c and 8d illustrate PIN and signature data entry operational modes of an EIR terminal according to the invention.

The drawings are not necessarily to scale, emphasis instead generally being placed upon illustrating the principles of the invention. In the drawings, like numerals are used to indicate like parts throughout the various views.

### DETAILED DESCRIPTION OF THE INVENTION

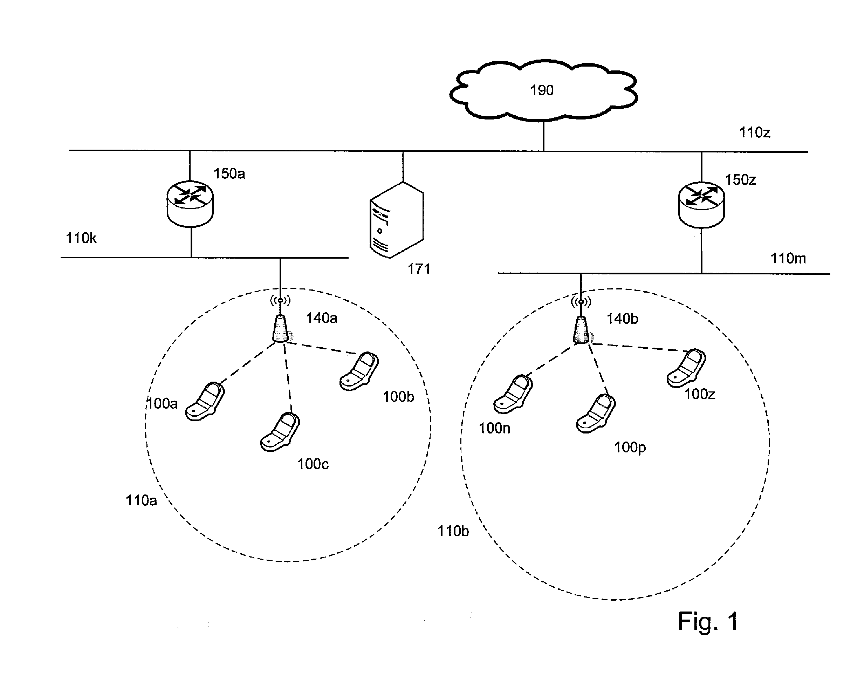

There is provided an encoded information reading (EIR) terminal for incorporation in a data collection system. The data collection system, schematically shown in Fig. 1, can include a plurality of EIR terminals 100a-100z in communication with a plurality of interconnected networks 110a-110z. In one aspect, the plurality of networks 110a-110z can include at least one IEEE 802.11-conformant wireless network. In another aspect, the plurality of networks 110a-110z can include at least one GSM-family wireless network, e.g., a wireless network supporting GSM, GPRS or EDGE wireless communication protocol. In a further aspect, the plurality of networks 110a-110z can include at least one CDMA-family wireless network, e.g., a wireless network supporting UMTS, HSPA or LTE wireless communication protocol. In a further aspect, the plurality of networks 110a-110z can include at least one TDMA-family wireless network, e.g., a wireless network supporting TDMA or EV-DO wireless communication protocol. In a further aspect, the plurality of networks 110a-110z can include at least one 4G wireless network, e.g., a wireless network supporting UWB or 802.16m (WiMax) wireless communication protocol. A skilled artisan would appreciate the fact that wireless networks implementing other wireless communication protocols are within the spirit and the scope of the invention.

In a further aspect, an EIR terminal can comprise a wireless communication interface. The EIR terminal 100c can establish a communication session with the host computer 171. In one embodiment, network frames can be exchanged by the EIR terminal 100c and the host computer 171 via one or more routers, base stations, and other infrastructure elements. In another embodiment, the host computer 171 can be reachable bye the EIR terminal 100c via a local area network (LAN). In a yet another embodiment, the host computer 171 can be reachable bye the EIR terminal 100c via a wide area network (WAN). A skilled artisan would appreciate the fact that other methods of providing interconnectivity between the EIR terminal 100c and the host computer 171 relying upon LANs, WANs, virtual private networks (VPNs), and/or other types of network are within the spirit and the scope of the invention.

In a further aspect, the wireless communication interface can be configured to support at least two wireless communication protocols. In one embodiment, the wireless communication interface can be configured to support two or more of GSM, GPRS, EDGE, HSPA, UMTS, CDMA, TDMA, and EV-DO protocols. A skilled artisan would appreciate the fact that wireless communication interfaces supporting other communication protocols are within the spirit and the scope of the invention.

In one embodiment, the communications between the EIR terminal 100c and the host computer 171 can comprise a series of HTTP requests and responses transmitted over one or more TCP connections. In one embodiment, the communications between the EIR terminal 100c and the host computer 171 can comprise VoIP traffic transmitted over one or more TCP and/or UDP ports. A skilled artisan would appreciate the fact that using other transport and application level protocols is within the scope and the spirit of the invention.

In one aspect, at least one of the messages transmitted by the EIR terminal can include decoded message data corresponding to, e.g., a bar code label or an RFID label attached to a product or to a shipment item. For example, an EIR terminal can transmit a request to the host computer to retrieve product information corresponding to a product identifier encoded by a bar code label attached to the product, or to transmit an item tacking record for an item identified by a bar code label attached to the product.

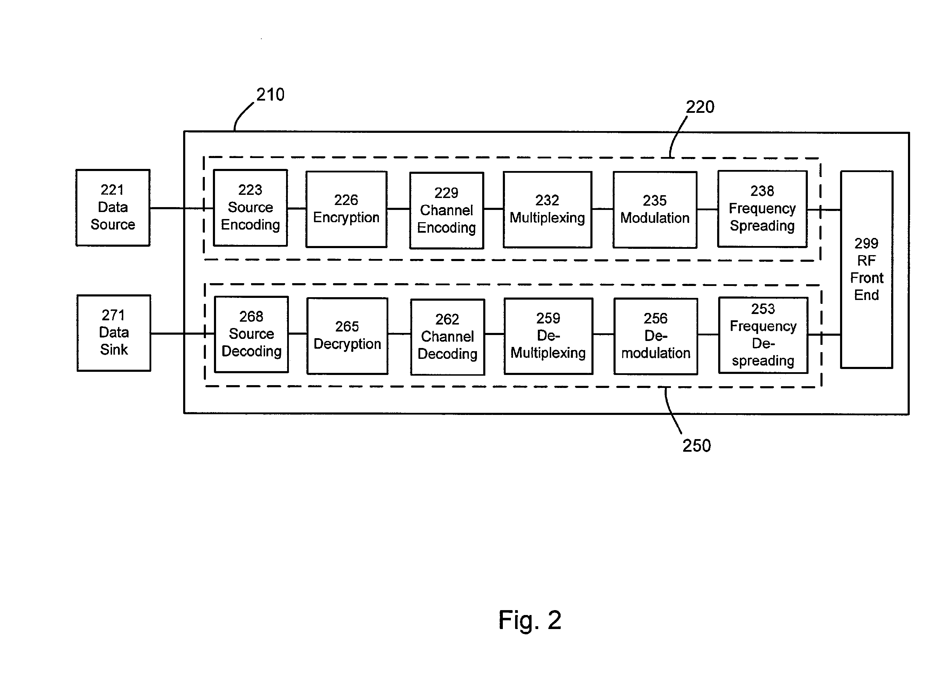

An EIR terminal according to the invention can comprise a wireless communication interface. As best viewed in Fig. 2, the wireless communication interface 210 can comprise a transmitter circuit 220 electrically coupled to a data source 221. The transmitter circuit 220 can be implemented by one or more specialized microchips, and can perform the following functions: source encoding 223, encryption 226, channel encoding 229, multiplexing 232, modulation 235, and frequency spreading 238.

The wireless communication interface 210 of Fig. 2 can further comprise a receiver circuit 250 electrically coupled to the data sink 271. The receiver circuit 250 can be implemented by one or more specialized microchips, and can perform the following functions: frequency de-spreading 253, demodulation 256, de-multiplexing 259, channel decoding 262, decryption 265, and source decoding 268.

Each of the transmitter circuit 220 and receiver circuit 250 can be electrically coupled to a radio frequency (RF) front end 299. The RF front end 299 can be used to convert high frequency RF signals to/from base-band or intermediate frequency signals. A skilled artisan would appreciate the fact that RF front ends of different data rates, sensitivities, output powers, operating frequencies, and measurement resolutions are within the scope and spirit of the invention.

On the receiving side, the RF front-end 299 can include all filters, low-noise amplifiers (LNAs), and down-conversion mixer(s) needed to process modulated RF signals received by the antenna into based-band signals. In one embodiment, the receiving part of the RF front end 299 can comprise one or more of the following components: a first matching circuit to transfer to the next stage the energy received by the antenna, a band-pass filter (BPF) to knock down out-of band jammers; a second matching circuit at the input of a low-noise amplifier (LNA), the LNA, the primary responsibility of which is to set the sensitivity of the receiver by providing a high gain; a third matching circuit between the LNA output and the receive (RX) mixer (down-converter), and the down-conversion RX mixer.

On the transmitting side, the RF frond-end area can be described as a "mirrored" version of a receiver. The front end of a transmitter up converts an outgoing base band signal and then feeds the signal to a high power amplifier. A skilled artisan would appreciate the fact that other ways of implementing the RF front end are within the spirit and the scope of the invention.

In one embodiment, the RF front end can be electrically coupled to a multi-band antenna. The multi-band antenna can be configured to receive and transmit RF signals within at least one frequency regulatory domain. The frequency regulatory domains supported by the multi-band antenna can include 850 MHz, 900 MHz, 1700 MHz, 1800 MHz, 1900 MHz, and 2100 MHz. A skilled artisan would appreciate the fact that multi-band antennas supporting other frequency regulatory domains are within the spirit and the scope of the invention. In a further aspect, the multi-band antenna can support two or more frequency regulatory domains.

According to one embodiment of the invention, the wireless communication interface supporting at least two wireless communication protocols can be implemented using a single dual-protocol (or multi-protocol) chipset. The chipset can include integrated circuits (ICs), application-specific integrated circuits (ASICs), and/or other components providing the necessary functionality.

In another embodiment, the wireless communication interface supporting at least two wireless communication protocols can be implemented using two or more chipsets. Each of the chipsets can include integrated circuits (ICs), application-specific integrated circuits (ASICs), and/or other components providing the necessary functionality.

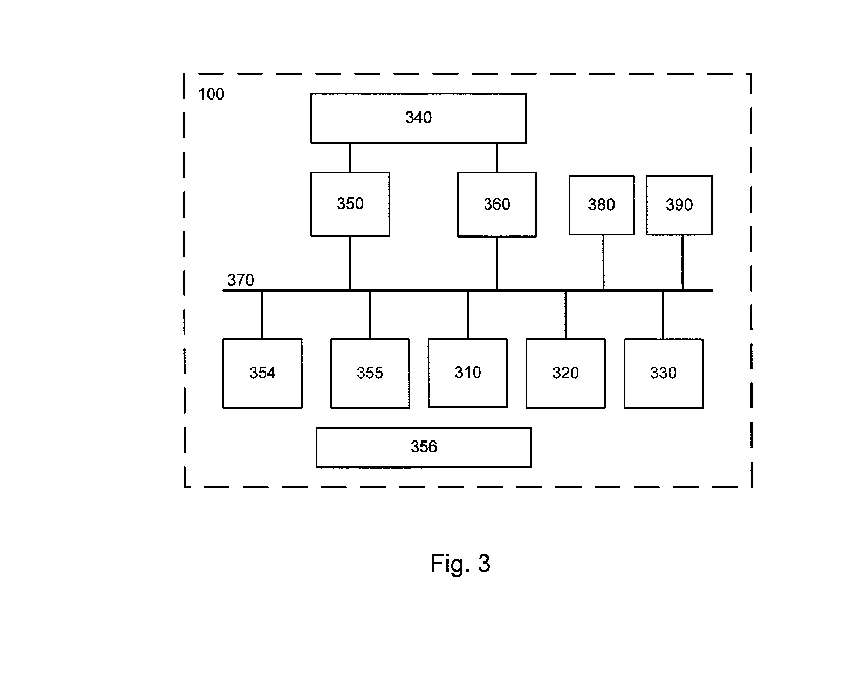

In a further aspect, the EIR terminal 100 can further comprise at least one microprocessor 310 and a memory 320, both coupled to the system bus 370, as best viewed in Fig. 3. The microprocessor 310 can be provided by a general purpose microprocessor or by a specialized microprocessor (e.g., an ASIC). In one embodiment, the EIR terminal 100 can comprise a single microprocessor which can be referred to as a central processing unit (CPU). In another embodiment, the EIR terminal 100 can comprise two or more microprocessors, for example a CPU and a specialized microprocessor (e.g., an ASIC). In one embodiment, the memory 320 can be provided by RAM, ROM, EPROM, and/or SIM card-based memory.

The EIR terminal 100 can further comprise one or more encoded information reading (EIR) devices 330, including a bar code reading device, an RFID reading device, and a card reading device, also coupled to the system bus 370. In one embodiment, an EIR reading device can be capable of outputting decoded message data corresponding to an encoded message. In another embodiment, the EIR reading device can output raw message data comprising an encoded message, e.g., raw image data or raw RFID data.

Of course, devices that read bar codes, read RFID, or read cards bearing encoded information may read more than one of these categories while remaining within the scope of the invention. For example, a device that reads bar codes may include a card reader, and/or RFID reader; a device that reads RFID may also be able to read bar codes and/or cards; and a device that reads cards may be able to also read bar codes and/or RFID. For further clarity, it is not necessary that a device's primary function involve any of these functions in order to be considered such a device; for example, a cellular telephone, smartphone, or PDA that is capable of reading bar codes is a device that read bar codes for purposes of the present invention

The EIR terminal 100 can further comprise a keyboard interface 354, a display adapter 355, both also coupled to the system bus 370. The EIR terminal 100 can further comprise a battery 356.

In one embodiment, the EIR terminal 100 can further comprise a GPS receiver 380. In one embodiment, the EIR terminal 100 can further comprise at least one connector 390 configured to receive a subscriber identity module (SIM) card.

As described herein *supra,* the EIR terminal 100 can further comprise a wireless communication interface 340. In one embodiment, the EIR terminal 100 EIR can be configured to dynamically select a wireless communication network and/or a wireless communication protocol to be used by the wireless communication interface 340.

In one embodiment, selection of a wireless communication network and/or a wireless communication protocol can be performed by a wireless communication protocol selector software program. The wireless communication protocol selector software program can be executed by the microprocessor 310.

In another aspect, the wireless communication protocol selector software program can be configured to optimize a value of a wireless communication protocol selection criterion.

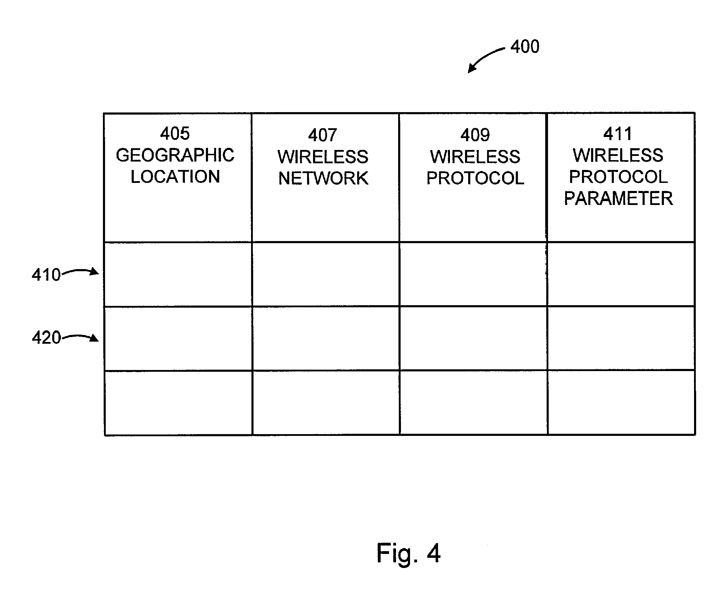

In a further aspect, the wireless communication protocol selection criterion can comprise a location-based criterion. In one embodiment, the location-based criterion can be evaluated using a location-based look-up table mapping a wireless communication protocol and/or wireless communication network to the geographic location of the EIR terminal. The structure of one embodiment of the location-based look-up table is schematically shown in Fig. 4. The location-based look-up table 400 can include one or more records 410, 420, each of the records comprising a geographic location field 405, a wireless communication network field 407, a wireless communication protocol field 409, and a wireless communication protocol parameter field 411.

In one embodiment, the geographic location field 405 can comprise the geographical coordinates or geographical coordinate ranges of the EIR terminal location. In another embodiment, the geographic location field 405 can comprise the country, state, and/or city of the EIR terminal location. A skilled artisan would appreciate the fact that other ways of encoding the EIR terminal location are within the spirit and the scope of the invention.

In one embodiment, the geographic location of the EIR terminal can be determined by the GPS receiver 380. In one embodiment, the geographic coordinates produced by the GPS receiver 380 can be converted into the country, state and/or city (or other form employed by the look-up table 400) using a geo-informational database located locally or remotely respective to the EIR terminal 100.

In another embodiment, the wireless communication protocol selection criterion can comprise a least cost routing (LCR) criterion. In one embodiment, the LCR criterion value can be equal to the cost of delivering the outbound traffic initiated by the EIR terminal. In another embodiment, the LCR criterion value can be equal to the cost of accepting the inbound traffic initiated by the EIR terminal. In a yet another embodiment, the LCR criterion value can be equal to the sum of the cost of delivering the outbound traffic initiated by the EIR terminal and the cost of accepting the inbound traffic initiated by the EIR terminal.

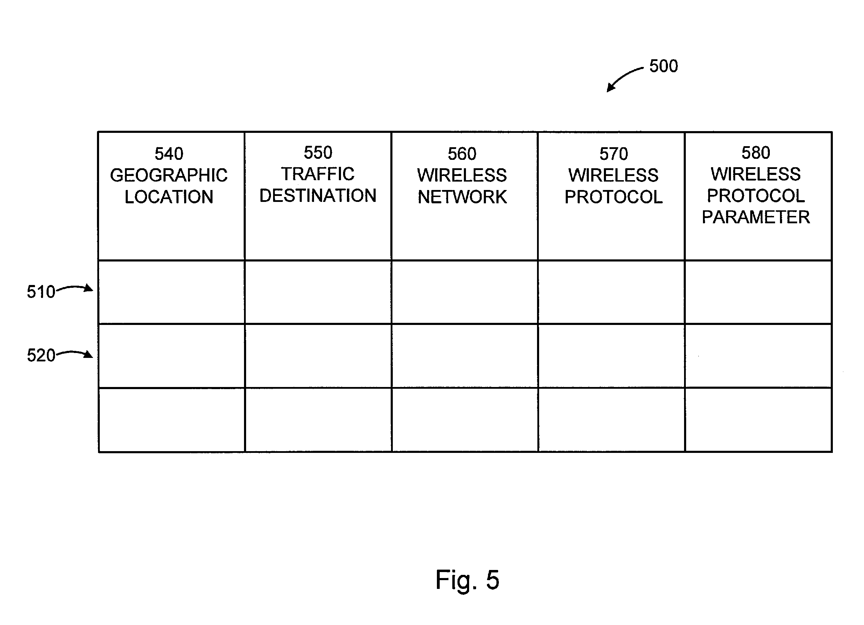

In one embodiment, the LCR criterion can be evaluated using an LCR look-up table mapping a wireless communication protocol and/or wireless communication network to the destination of the EIR terminal-originated traffic. In another embodiment, the LCR criterion can be evaluated using a look-up table mapping a wireless communication protocol and/or wireless communication network to the geographic location of the EIR terminal and destination of the EIR terminal-originated traffic. The structure of one embodiment of the LCR look-up table is schematically shown in Fig. 5. The LCR look-up table 500 can include one or more records 510, 520, each of the records comprising a traffic destination field 550, a wireless communication network field 560, a wireless communication protocol field 570, and a wireless communication protocol parameter field 580. In another embodiment, each of the records 510, 520 can further comprise a geographic location field 540.

In one embodiment, the geographic location field 540 can comprise the geographical coordinates or geographical coordinate ranges of the EIR terminal location. In another embodiment, the geographic location field 540 can comprise the country, state, and/or city of the EIR terminal location. A skilled artisan would appreciate the fact that other ways of encoding the EIR terminal location are within the spirit and the scope of the invention.

In one embodiment, the traffic destination field 550 can comprise the country, state, and/or city of the EIR terminal location. A skilled artisan would appreciate the fact that other ways of encoding the traffic destination are within the spirit and the scope of the invention.

In a further aspect, the wireless communication protocol selection criterion can comprise a combination (e.g., a weighted sum) of the location-based criterion and the least cost routing criterion.

In one embodiment, the EIR terminal can be configured to search beacon signals over a pre-defined frequency range (e.g., between 800MHz and 5GHz), and then select a wireless communication network and/or frequency channel which would produce the optimal value of the user-defined criterion.

In one embodiment, the user-defined criterion can be evaluated upon the EIR terminal being powered on. In another embodiment, the user-defined criterion can be evaluated immediately before the EIR terminal attempting to initiate a communication session, so that a wireless communication network and/or a wireless communication protocol can be chosen which would optimize the user-defined criterion. In a yet another embodiment, the user-defined criterion can be evaluated periodically at established time intervals so that the EIR terminal can change the wireless communication network and/or the wireless communication protocol between communication sessions or during a communication session if a wireless communication network and/or a wireless communication protocol is detected yielding a value of the user-defined criterion which is closer to the optimum than that of the current network or protocol. In a yet another embodiment, the value of a user-defined criterion can be calculated responsive to the EIR terminal changing its geographic location, so that the EIR terminal can automatically (*i.e*., without user intervention) change the wireless communication network and/or the wireless communication protocol between communication sessions or during a communication session. Thus, the EIR terminal can always maintain an optimal network connection irrespectively of changing external conditions (*e.g*., when the terminal is physically moved).

In another aspect, the EIR terminal can select a wireless network and/or wireless communication protocol based on the contents of a preferred routing list (PRL) or a preferred operator list (POL) which can be stored locally in the memory 320. The PRL or POL can contain an ordered list of network operators to be used by the EIR terminal.

In one embodiment, the PRL (POL) can contain a list of records, each of those records containing a wireless network operator identifier and a preference value.

The structure of one embodiment of the PRL (POL) table is schematically shown in Fig. 4c. The location-based look-up table 480 can include one or more records 495, 497, each of the records comprising a wireless communication network field 487, a wireless communication protocol field 489, and a wireless communication protocol parameter field 491. In one embodiment, each of the PRL (POL) records 495, 497 can further comprise a geographic location field 493. In another embodiment, the contents of the PRL (POL) table 480 can be updated responsive to the EIR terminal changing its geographic location.

In another aspect, the PRL (POL) table 480 can be initialized by the manufacturer of the EIR terminal. In another embodiment, the PRL (POL) table 480 can be initialized and/or modified by the operator of the wireless network to which the EIR terminal is connected. In a yet another embodiment, the PRL (POL) table 480 can be initialized and/or modified by the user of the EIR terminal via a user interface.

In another aspect, initialization and/or modification of the PRL (POL) table 480 can be initiated manually by the user of the EIR terminal by scanning a pre-defined bar code, or by the user interacting with the user interface (*e.g.*, via a graphical user interface (GUI), or via a hardware-implemented control). A skilled artisan would appreciate the fact that other methods of initializing and/or modifying the PRL (POL) table 480 are within the scope and the spirit of the invention.

In another aspect, the EIR terminal 100 can be configured to support multi-tasking mode, e.g., by running a multi-tasking operating system. In one embodiment, the EIR terminal can be configured to run Windows Mobile operating system. In one embodiment, the EIR terminal can be configured to run embedded Linux operating system. A skilled artisan would appreciate the fact that EIR terminal running other embedded multi-tasking operating systems are within the spirit and the scope of the invention.

An EIR terminal running a multi-tasking operating system can execute the wireless communication protocol selector software program in parallel with executing other software programs, including system and/or application software programs. In one embodiment, a system software program and/or an application software program can be executed by an EIR terminal in parallel with the wireless communication protocol selector software program evaluating the wireless communication protocol selection criterion and switching the wireless communication network and/or wireless communication protocol. Thus, switching the wireless communication network and/or wireless communication protocol by an EIR terminal according to the invention does not require re-setting the terminal or re-starting system and/or application software programs which were running when switching the wireless communication network and/or wireless communication protocol had been initiated by the wireless communication protocol selector software program.

In another aspect, selection of a wireless communication network, a wireless communication protocol, or one or more parameters of a wireless communication protocol can be initiated manually by the user of the EIR terminal. In one embodiment, the selection can be initiated by scanning a pre-defined bar code. In another embodiment, the selection can be initiated by the user interacting with the user interface (e.g., via a graphical user interface (GUI), or via a hardware-implemented control). A skilled artisan would appreciate the fact that other methods of manually initiating selection of a wireless communication network, a wireless communication protocol, or one or more parameters of the wireless communication protocol are within the scope and the spirit of the invention.

In another aspect, the wireless communication protocol selector software program can be invoked be another software program executed by the EIR terminal. The invoking software program can be developed by the EIR terminal manufacturer or by a third party application developer.

Due to its ability to dynamically select a wireless communication network and a wireless communication protocol, the EIR terminal according to the present invention can be advantageously used, e.g., by a company operating in several geographies with different wireless communication standards. Using the EIR terminal according to the present invention would allow such a company to deploy the same EIR terminal model in all the geographies.

In another aspect, the EIR terminal according to the invention can be configured to store in memory 320 at least one wireless account data structure. In one embodiment, a wireless account data structure can comprise a wireless account identifier and a PRL (POL). A skilled artisan would appreciate the fact that wireless account data structures comprising other wireless account information are within the spirit and the scope of the invention.

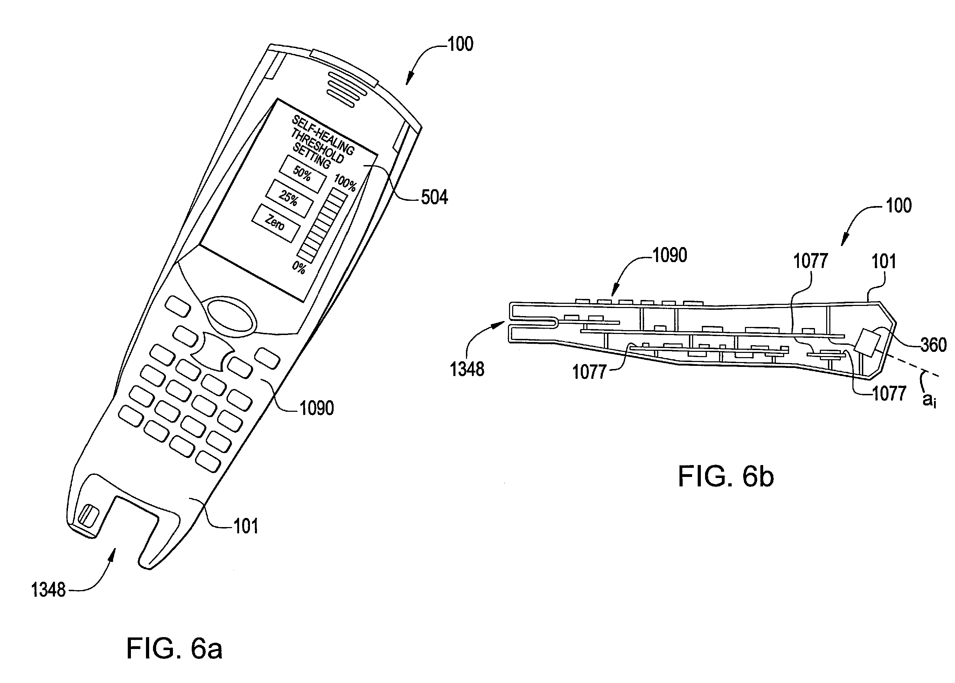

Form factors and housings for the EIR terminal according to the invention are now being described. The components of EIR terminal 100 can be incorporated into a variety of different housings. As indicated by the embodiment of Figs. 6a and 6b, the components of Fig. 5 can be incorporated into a hand held housing 101. EIR terminal 100 of Figs. 6a and 6b is in the form factor of a hand held portable data terminal. EIR terminal 100 as shown in Figs. 6a and 6b includes a keyboard 1090, a display 504 having an associated touch screen overlay, a card reader 1348, and an imaging module 360 which includes the components of imaging assembly as described herein; namely, image sensor array incorporated on an image sensor IC chip. Imaging module 360 has an associated imaging axis, aᵢ. As indicated by the side view of Fig. 6b, the components of the block diagram of Fig. 5 may be supported within housing 101 on a plurality of circuit boards 1077. Imaging module 360 may include an image sensor array having color sensitive pixels as described in Provisional Patent Application Nos. 60/687,606, filed Jun. 3, 2005, 60/690,268, filed Jun. 14, 2005, 60/692,890, filed Jun. 22, 2005, and 60/694,371, filed Jun. 27, 2005, all of which are entitled Digital Picture Taking Optical Reader Having Hybrid Monochrome And Color Image Sensor, and all of which are incorporated herein by reference.

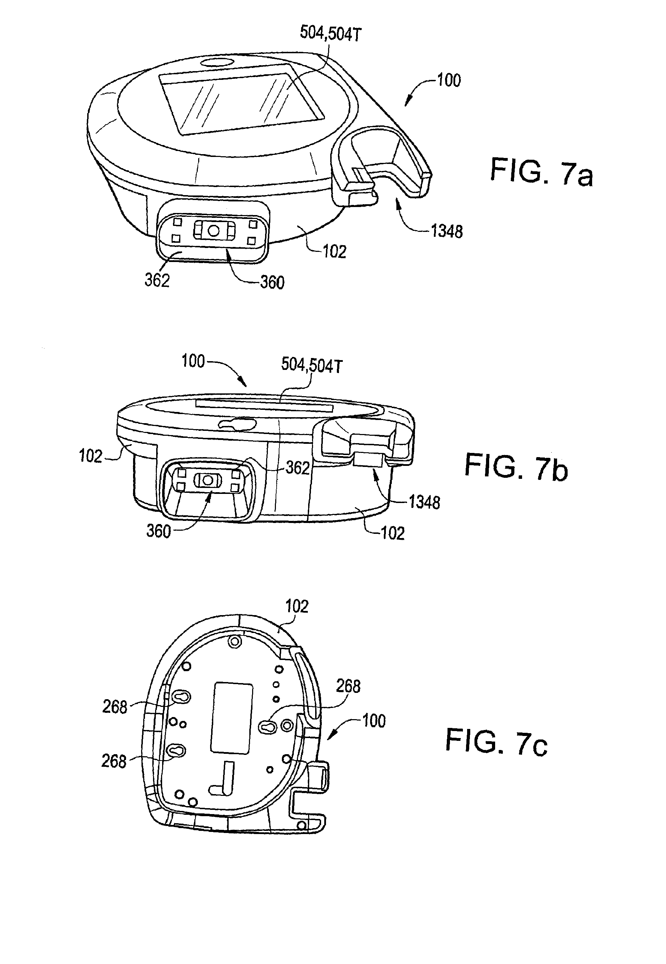

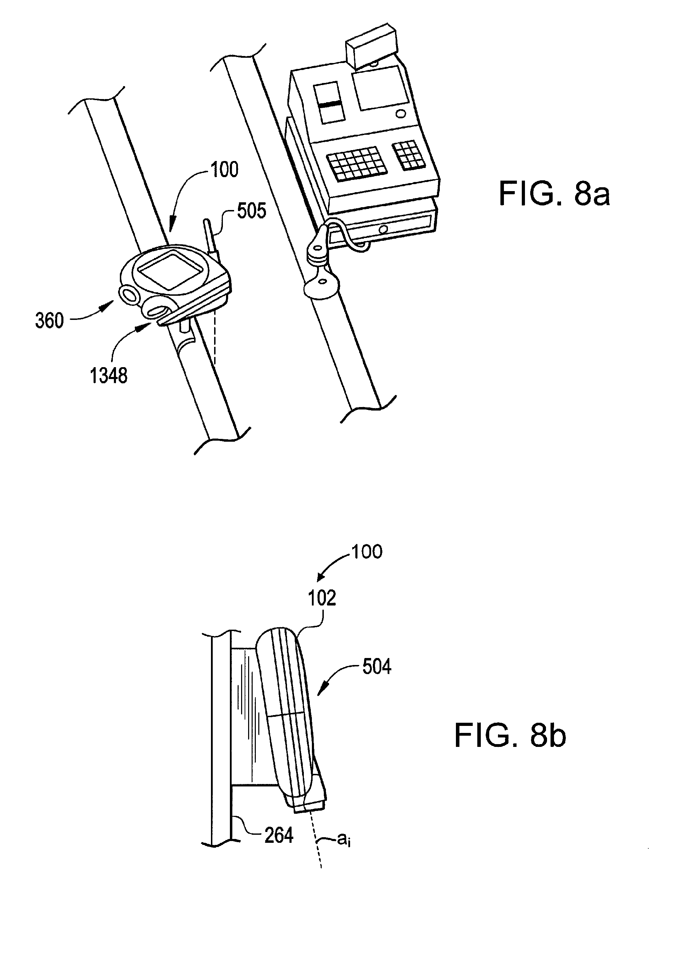

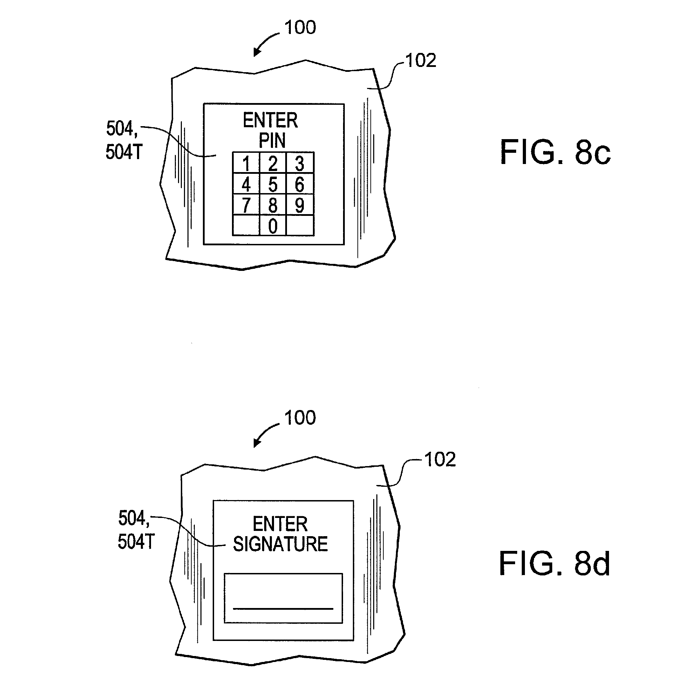

In the embodiment of Figs. 7a-7c, the EIR terminal 100 is in the form of a transaction terminal which may be configured as a retail purchase transaction terminal or as a price verifier. Housing 102 of the transaction terminal shown in Figs. 7a-7c is configured to be portable so that it can be moved from location to location and is further configured to be replaceably mounted on a fixed structure such as a fixed structure of a cashier station or a fixed structure of the retail store floor (e.g., a shelf, a column 264 best viewed in Fig. 8b). Referring to bottom view of Fig. 7c, the housing 102 of the EIR terminal 100 has formations 268 facilitating the replaceable mounting of EIR terminal 100 on a fixed structure. Referring now to Fig. 7b, EIR terminal 100 includes a display 504 having an associated touch screen 504T, a card reader 1348, an imaging module 360, and a luminous shroud 362. When light from the illumination block (not shown in Fig. 8) strikes luminous shroud 362, the shroud glows to attract attention to the location of imaging assembly. In certain operating modes as indicated in Fig. 8c, the EIR terminal 100 in accordance with any of Figs. 7a-7c, displays on display 504 a PIN entry screen prompting a customer to enter PIN information into touch screen 504T. In other operating modes, as indicated in Fig. 8d, the EIR terminal 100 displays on display 504 a signature prompt screen prompting a customer to enter signature information into the device with use of a stylus 505.

Referring to Figs. 8a and 8b, various installation configurations for the EIR terminal of Figs. 7a-7c are shown. In the view of Fig. 8a, the EIR terminal 100 is installed as a retail purchase transaction terminal at a point of sale cashier station. In the setup of Fig. 8a, the EIR terminal 100 is configured as a retail purchase transaction terminal and is utilized to aid and facilitate retail transactions at a point of sale. A customer may enter a credit card or a debit card into card reader 1348 and retail purchase transaction terminal may transmit the credit card information to credit/debit authorization network.

In the view of Fig. 8b, the EIR terminal 100 is configured as a price verifier to aid customers in checking prices of products located on a store floor. EIR terminal 100 may be mounted on a shelf (not shown in Fig. 8b) or on a column 254 or other fixed structure of the retail store. EIR terminal 100 may decode bar code data from bar codes on store products and transmit decoded out bar code messages to a store server for lookup of price information which is sent back from the store server to terminal 100 for display on display 504.

While the present invention has been particularly shown and described with reference to certain exemplary embodiments, it will be understood by one skilled in the art that various changes in detail may be affected therein without departing from the spirit and scope of the invention as defined by claims that can be supported by the written description and drawings. Further, where exemplary embodiments are described with reference to a certain number of elements it will be understood that the exemplary embodiments can be practiced utilizing less than the certain number of elements.

A small sample of systems methods and apparatus that are described herein is as follows:
A1. An encoded information reading (EIR) terminal comprising:
   a microprocessor;
   a memory communicatively coupled to said microprocessor;
   an EIR device selected from the group consisting of: a bar code reading device, an RFID reading device, and a card reading device, said EIR device configured to perform at least one of: outputting raw message data comprising an encoded message and outputting decoded message data corresponding to an encoded message;
   a multi-band antenna; and
   a wireless communication interface further comprising a radio frequency front end electrically coupled to said multi-band antenna, said wireless communication interface configured to support at least two wireless communication protocols;
   wherein said microprocessor is configured to execute a wireless communication protocol selector software program, said wireless communication protocol selector software program configured to dynamically select at least one of: a wireless communication network and a wireless communication protocol by optimizing at least one of: a location-based criterion and a least cost routing criterion.
A2. The EIR terminal of A1, wherein said microprocessor is configured to execute at least one of: a system software program and an application software program in parallel with said wireless communication protocol selector software program switching at least one of: a wireless communication network and a wireless communication protocol.
A3. The EIR terminal of A1, wherein said wireless communication protocol selector software program is invoked by a software program developed by one of: a manufacturer of said EIR terminal and a third party application developer.
A4. The EIR terminal of A1, wherein said multi-band antenna is configured to perform at least one of: transmitting radio signals in two or more frequency regulatory domains, receiving radio signals in two or more frequency regulatory domains.
A5. The EIR terminal of A1, wherein said multi-band antenna is configured to perform at least one of: transmitting radio signals in two or more frequency regulatory domains, receiving radio signals in two or more frequency regulatory domains; and
   wherein said two or more frequency regulatory domains include two or more of: 850 MHz, 900 MHz, 1700 MHz, 1800 MHz, 1900 MHz, 2100 MHz.
A6. The EIR terminal of A1, wherein said wireless communication interface is configured to support at least two of: GSM, GPRS, EDGE, HSPA, CDMA, EV-DO TDMA, and UMTS wireless communication protocols.
A7. The EIR terminal of A1 further comprising at least one connector configured to receive a SIM card.
A8. The EIR terminal of A1, wherein said memory is configured to store:
   a first wireless account data structure comprising a first wireless account identifier; and
   a second wireless account data structure comprising a second wireless account identifier.
A9. The EIR terminal of A1, wherein said memory is configured to store:
   a first wireless account data structure comprising a first wireless account identifier and one of: a first preferred routing list, a first preferred operator list; and
   a second wireless account data structure comprising a second wireless account identifier and one of: a second preferred routing list, a second preferred operator list.

B1. An encoded information reading (EIR) terminal comprising:
   a microprocessor;
   a memory communicatively coupled to said microprocessor;
   an EIR device selected from the group consisting of: a bar code reading device, an RFID reading device, and a card reading device, said EIR device configured to perform at least one of: outputting raw message data comprising an encoded message and outputting decoded message data corresponding to an encoded message; and
   a multi-band antenna;
   a wireless communication interface further comprising a radio frequency front end electrically coupled to said multi-band antenna, said wireless communication interface configured to support at least two wireless communication protocols;
   wherein said microprocessor is configured to execute a wireless communication protocol selector software program, said wireless communication protocol selector software program configured to dynamically select at least one of: a wireless communication network and a wireless communication protocol; and
   wherein said microprocessor is configured to execute at least one of: a system software program and an application software program in parallel with said wireless communication protocol selector software program switching at least one of: a wireless communication network and a wireless communication protocol.
B2. The EIR terminal of B1, wherein said wireless communication protocol selector software program is configured to optimize at least one of: a location-based criterion and a least cost routing criterion.
B3. The EIR terminal of B1, wherein said wireless communication protocol selector software program is configured to dynamically select at least one of: a wireless communication network and a wireless communication protocol responsive to at least one of: a user interaction with a user interface, scanning a pre-defined bar code.
B4. The EIR terminal of B1, wherein said wireless communication protocol selector software program is invoked by a software program developed by one of: a manufacturer of said EIR terminal and a third party application developer.
B5. The EIR terminal of B1, wherein said multi-band antenna is configured to perform at least one of: transmitting radio signals in two or more frequency regulatory domains, receiving radio signals in two or more frequency regulatory domains.
B6. The EIR terminal of B1, wherein said multi-band antenna is configured to perform at least one of: transmitting radio signals in two or more frequency regulatory domains, receiving radio signals in two or more frequency regulatory domains; and
   wherein said two or more frequency regulatory domains include two or more of: 850 MHz, 900 MHz, 1700 MHz, 1800 MHz, 1900 MHz, 2100 MHz.
B7. The EIR terminal of B1, wherein said wireless communication interface is configured to support at least two of GSM, GPRS, EDGE, HSPA, CDMA, EV-DO TDMA, and UMTS wireless communication protocols.
B8. The EIR terminal of B1 further comprising at least one connector configured to receive a SIM card.
B9. The EIR terminal of B1, wherein said memory is configured to store:
   a first wireless account data structure comprising a first wireless account identifier; and
   a second wireless account data structure comprising a second wireless account identifier.
B10. The EIR terminal of B1, wherein said memory is configured to store:
   a first wireless account data structure comprising a first wireless account identifier and one of: a first preferred routing list, a first preferred operator list; and
   a second wireless account data structure comprising a second wireless account identifier and one of: a second preferred routing list, a second preferred operator list.

While the present invention has been described with reference to a number of specific embodiments, it will be understood that the true spirit and scope of the invention should be determined only with respect to claims that can be supported by the present specification. Further, while in numerous cases herein wherein systems and apparatuses and methods are described as having a certain number of elements it will be understood that such systems, apparatuses and methods can be practiced with fewer than or more than the mentioned certain number of elements. Also, while a number of particular embodiments have been described, it will be understood that features and aspects that have been described with reference to each particular embodiment can be used with each remaining particularly described embodiment.

## Claims

1. An encoded information reading (EIR) terminal comprising:
a microprocessor;
a memory communicatively coupled to said microprocessor;
an EIR device selected from the group consisting of: a bar code reading device, an RFID reading device, and a card reading device, said EIR device configured to perform at least one of: outputting raw message data comprising an encoded message and outputting decoded message data corresponding to an encoded message;
a multi-band antenna; and
a wireless communication interface further comprising a radio frequency front end electrically coupled to said multi-band antenna, said wireless communication interface configured to support at least two wireless communication protocols;
wherein said microprocessor is configured to execute a wireless communication protocol selector software program, said wireless communication protocol selector software program configured to dynamically select at least one of: a wireless communication network and a wireless communication protocol by optimizing at least one of: a location-based criterion and a least cost routing criterion.

2. The EIR terminal of claim 1, wherein said microprocessor is configured to execute at least one of: a system software program and an application software program in parallel with said wireless communication protocol selector software program switching at least one of: a wireless communication network and a wireless communication protocol.

3. An encoded information reading (EIR) terminal comprising:
a microprocessor;
a memory communicatively coupled to said microprocessor;
an EIR device selected from the group consisting of: a bar code reading device, an RFID reading device, and a card reading device, said EIR device configured to perform at least one of: outputting raw message data comprising an encoded message and outputting decoded message data corresponding to an encoded message; and
a multi-band antenna;
a wireless communication interface further comprising a radio frequency front end electrically coupled to said multi-band antenna, said wireless communication interface configured to support at least two wireless communication protocols;
wherein said microprocessor is configured to execute a wireless communication protocol selector software program, said wireless communication protocol selector software program configured to dynamically select at least one of: a wireless communication network and a wireless communication protocol; and
wherein said microprocessor is configured to execute at least one of: a system software program and an application software program in parallel with said wireless communication protocol selector software program switching at least one of: a wireless communication network and a wireless communication protocol.

4. The EIR terminal of claim 3, wherein said wireless communication protocol selector software program is configured to optimize at least one of: a location-based criterion and a least cost routing criterion.

5. The EIR terminal of claim 3, wherein said wireless communication protocol selector software program is configured to dynamically select at least one of: a wireless communication network and a wireless communication protocol responsive to at least one of:
a user interaction with a user interface, scanning a pre-defined bar code.

6. The EIR terminal of claim 1 or 3, wherein said wireless communication protocol selector software program is invoked by a software program developed by one of: a manufacturer of said EIR terminal and a third party application developer.

7. The EIR terminal of claim 1 or 3, wherein said multi-band antenna is configured to perform at least one of: transmitting radio signals in two or more frequency regulatory domains, receiving radio signals in two or more frequency regulatory domains.

8. The EIR terminal of claim 1 or 3, wherein said multi-band antenna is configured to perform at least one of: transmitting radio signals in two or more frequency regulatory domains, receiving radio signals in two or more frequency regulatory domains; and
wherein said two or more frequency regulatory domains include two or more of: 850 MHz, 900 MHz, 1700 MHz, 1800 MHz, 1900 MHz, 2100 MHz.

9. The EIR terminal of claim 1 or 3, wherein said wireless communication interface is configured to support at least two of GSM, GPRS, EDGE, HSPA, CDMA, EV-DO TDMA, and UMTS wireless communication protocols.

10. The EIR terminal of claim 1 or 3 further comprising at least one connector configured to receive a SIM card.

11. The EIR terminal of claim 1 or 3, wherein said memory is configured to store:
a first wireless account data structure comprising a first wireless account identifier; and
a second wireless account data structure comprising a second wireless account identifier.

12. The EIR terminal of claim 1 or 3, wherein said memory is configured to store:
a first wireless account data structure comprising a first wireless account identifier and one of: a first preferred routing list, a first preferred operator list; and
a second wireless account data structure comprising a second wireless account identifier and one of: a second preferred routing list, a second preferred operator list.
